(19) Europäisches Patentamt | European Patent Office | Office européen des brevets

(11) **EP 3 716 023 B1**

(12) **EUROPEAN PATENT SPECIFICATION**

(45) Date of publication and mention
of the grant of the patent:
**28.02.2024 Bulletin 2024/09**

(21) Application number: **19216266.7**

(22) Date of filing: **13.12.2019**

(51) International Patent Classification (IPC):
*G06F 3/03* *(2006.01)*    *B64D 9/00* *(2006.01)*
*G06T 7/70* *(2017.01)*    *G06F 1/16* *(2006.01)*
*G06F 3/00* *(2006.01)*    *G06T 7/73* *(2017.01)*

(52) Cooperative Patent Classification (CPC):
**G06F 3/0304; B64D 9/00; G06F 1/1686;
G06F 1/1694; G06F 3/002; G06T 7/70; G06T 7/73;**
G06F 2200/1614; G06T 2207/30204;
G06T 2207/30244; G06T 2207/30268

(54) **AUTO-ROTATING CONTROLLER DISPLAY AND METHODS OF DETERMINING CONTROLLER DISPLAY ORIENTATION FOR CARGO HANDLING SYSTEMS**

SELBSTDREHENDE STEUERUNGSANZEIGE UND VERFAHREN ZUR BESTIMMUNG DER STEUERUNGSANZEIGEAUSRICHTUNG FÜR FRACHTHANDHABUNGSSYSTEME

AFFICHAGE D'ORGANE DE COMMANDE À ROTATION AUTOMATIQUE ET PROCÉDÉS POUR DÉTERMINER L'ORIENTATION D'UN AFFICHAGE D'ORGANE DE COMMANDE POUR SYSTÈMES DE MANUTENTION DE CARGAISON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2019 IN 201941011520
10.06.2019 US 201916436492**

(43) Date of publication of application:
**30.09.2020 Bulletin 2020/40**

(73) Proprietor: **Goodrich Corporation**
**Charlotte, NC 28217-4578 (US)**

(72) Inventors:
• **BALASUBRAMANIAN, Rameshkumar**
**560016 Bangalore, Karnataka (IN)**
• **NAYAK, Sudhendra**
**560076 Bangalore, Karnataka (IN)**

(74) Representative: **Dehns**
**St. Bride's House**
**10 Salisbury Square**
**London EC4Y 8JD (GB)**

(56) References cited:
**US-A1- 2017 345 399    US-A1- 2018 089 611**

**Description**

**CROSS REFERENCE TO RELATED APPLICATIONS**

**FIELD**

The present disclosure relates to cargo handling systems, and more specifically, to an auto-rotating controller display and methods of determining controller display orientation for cargo handling systems.

**BACKGROUND**

Cargo handling systems move loads, for example, pallets or unit load devices (ULDs), through the cargo area of an aircraft using motorized wheels (e.g., power drive units (PDUs) and freighter common turntables (FCTs)) located generally along on a cargo deck of the aircraft. The movement of ULDs is generally controlled by an operator using various control panels, for example using a master control panel (MCP), an outside control panel (OCP), and/or local control panels (LCPs).

Portable electronic devices (PEDs), such as tablet computing devices, enable implementation of control panels and cargo maintenance display units (CMDUs) functionalities into the PED. The portability of PEDs enables the operator to freely carry the PED (and thus the control panel display) into the cargo area. As the operator moves through the aircraft, the orientation of the PED display may not update and/or change to the actual heading of the aircraft. Movement of ULDs is relative to the aircraft heading direction. Thus, failure of the PED display to update the heading of the aircraft to the direction of viewing of the operator can confuse the operator as to which direction the ULD should be driven and/or as which PDUs should be activated. US 2018/0089611 A1 describes a paired drone-based system and method for conducting a modified inspection of a delivery vehicle.

**SUMMARY**

A portable electronic device for controlling a cargo handling system is disclosed herein and defined in claim 1.

A method for orienting a display of a portable electronic device configured to control a cargo handling system is also disclosed herein and defined in claim 7.

An article of manufacture including a tangible, non-transitory computer-readable storage medium, having instructions stored thereon for orienting a display of a portable electronic device configured to control a cargo handling system, is also disclosed herein and defined in claim 12.

The forgoing features and elements may be combined in various combinations without exclusivity, unless expressly indicated herein otherwise. These features and elements as well as the operation of the disclosed embodiments will become more apparent in light of the following description and accompanying drawings.

**BRIEF DESCRIPTION OF THE DRAWINGS**

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like numbers denote to like elements.

FIG. 1A illustrates a schematic view of an aircraft being loaded with cargo, in accordance with various embodiments;
FIG. 1B illustrates a portion of an aircraft cargo deck, in accordance with various embodiments;
FIG. 2 illustrates a schematic block diagram of a cargo handling system having a PED with an auto-rotating controller display, in accordance with various embodiments;
FIGs. 3A and 3B illustrate a plan view and a perspective view, respectively, of cargo deck 12, in accordance with various embodiments;
FIGs. 4A, 4B, and 4C illustrate various viewing angles of a PED camera relative to a right optical label, in accordance with various embodiments;
FIGs. 4D, 4E, and 4F illustrate various viewing angles of a PED camera relative to a left optical label, in accordance with various embodiments;
FIG. 5A illustrates various PED angles and aircraft heading angles relative to a right optical label, in accordance with various embodiments;
FIG. 5B illustrates various PED angles and aircraft heading angles relative to a left optical label, in accordance with various embodiments;

FIGs. 6A and 6B illustrate a method of determining an aircraft heading and a PED orientation based on a viewing angle of a PED camera relative to an optical label , in accordance with various embodiments;
FIG. 7A illustrates various PED display orientations, in accordance with various embodiments;
FIG. 7B illustrates a process flow for determining a PED display orientation, in accordance with various embodiments;
FIG. 8A illustrates a PED oriented in a forward direction, in accordance with various embodiments;
FIGs. 8B and 8C illustrate a display of a forward oriented PED, in accordance with various embodiments;
FIG. 9A illustrates a PED oriented in a right-facing direction, in accordance with various embodiments;
FIGs. 9B and 9C illustrate a display of a right-facing PED, in accordance with various embodiments;
FIG. 10A illustrates a PED oriented in an aft direction, in accordance with various embodiments;
FIGs. 10B and 10C illustrate a PED display of an aft oriented PED, in accordance with various embodiments;
FIG. 11A illustrates a PED oriented in a left-facing direction, in accordance with various embodiments; and
FIGs. 11B and 11C illustrate a PED display of a left-facing PED, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

## DETAILED DESCRIPTION

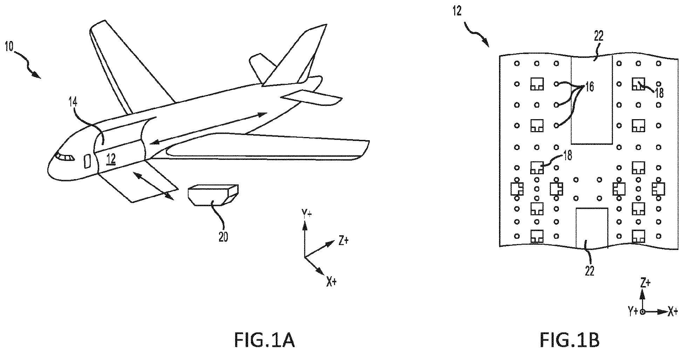

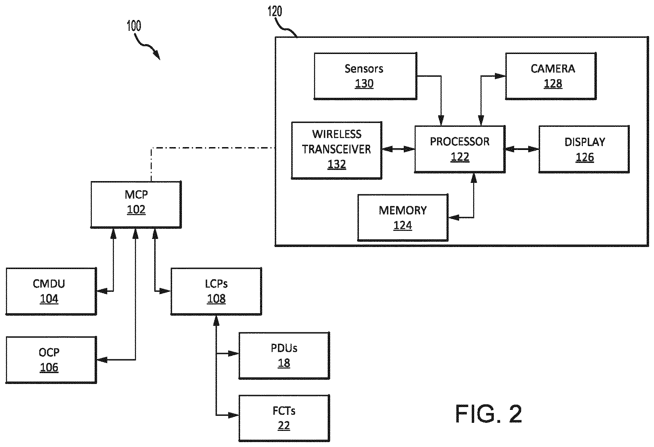

The detailed description of exemplary embodiments herein makes reference to the accompanying drawings, which show exemplary embodiments by way of illustration. While these exemplary embodiments are described in sufficient detail to enable those skilled in the art to practice the disclosure, it should be understood that other embodiments may be realized and that logical changes and adaptations in design and construction may be made in accordance with this disclosure and the teachings herein. Thus, the detailed description herein is presented for purposes of illustration only and not of limitation. The scope of the disclosure is defined by the appended claims. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.
Surface shading lines may be used throughout the figures to denote different parts but not necessarily to denote the same or different materials. Throughout the present disclosure, like reference numbers denote like elements. Accordingly, elements with like element numbering may be shown in the figures, but may not necessarily be repeated herein for the sake of clarity.
As used herein, "aft" refers to the direction associated with a tail (e.g., the back end) of an aircraft, or generally, to the direction of exhaust of a gas turbine engine. As used herein, "forward" refers to the direction associated with a nose (e.g., the front end) of the aircraft, or generally, to the direction of flight or motion. As used herein, "proximate" refers to a direction toward, or a location generally closer to a reference component. As used herein, "longitudinal" refers to a forward to aft direction.
In accordance with various embodiments, and with reference to FIG. 1A, an aircraft 10 having a cargo deck 12 is illustrated. Aircraft 10 may comprise a cargo load door 14. Cargo 20 may be loaded through cargo load door 14 and onto cargo deck 12. Items to be shipped by air, freight, and/or the like are typically loaded first onto specially configured pallets or into specially configured containers. In aviation, those various pallets and/or containers are commonly are referred to as unit load devices (ULDs). In various embodiments, cargo 20 may be a ULD. Once inside aircraft 10, the cargo 20 is moved along cargo deck 12 to its final stowage position. Multiple pieces of cargo may be brought onboard aircraft 10, during one or more loading procedures (e.g., at separate destinations), with each piece of cargo being placed in its respective stowage and transportation position on cargo deck 12. After aircraft 10 has reached its destination, cargo 20 may be unloaded from aircraft 10 similarly, but in reverse sequence to the loading procedure.
In accordance with various embodiments, and with reference to FIG. 1B, cargo deck 12 is illustrated in greater detail. The cargo deck 12 may be defined by inner walls of aircraft 10. Cargo deck 12 may include a plurality of freely rotating conveyance rollers 16 and a number of power drive units (PDUs) 18 mounted in cargo deck 12. PDUs 18 may be configured to propel cargo over conveyance rollers 16 and across cargo deck 12. In various embodiments, cargo deck 12 may include one or more freighter common turntables (FCTs) 22 configured to translate cargo across cargo deck 12.
Referring to FIG. 2, and with continued reference to FIG. 1A, to facilitate movement of cargo 20 along cargo deck 12, aircraft 10 may include a cargo handling system 100. Cargo handling system 100 may be configured to control and monitor the cargo loading and unloading processes. Cargo handling system 100 may comprise a master control panel (MCP) 102. MCP 102 may be in operable communication, via wired or wireless connection, with a cargo maintenance display unit (CMDU) 104 and an outside control panel (OCP) 106. CMDU 104 may be configured to track and display the health or operating condition of various components (e.g. PDUs 18) of cargo handling system 100. OCP 106 may provide an interface or means for controlling cargo handling system 100 remotely (e.g., from the cockpit of aircraft 10, from a main cargo handling office, or any other location from which cargo deck 12 may not be readily in view). MCP 102 may be in operable communication, via wired or wireless connection, with one or more local control panels (LCPs) 108. LCPs 108 may be configured to control PDUs 18 and/or FCTs 22. For example, an operator may use LCPs 108 to send command signals, via wired or wireless connection, to PDUs 18 and FCTs 22 to control the movement of cargo 20 over cargo deck 12.

In accordance with various embodiments, cargo handling system 100 includes a portable electronic device (PED) 120. PED 120 includes a processor 122, a memory 124, a user interface 126 (also referred to herein as a display), a camera 128, sensors 130 (e.g., magnetometer, compasses, accelerometers, barometer, etc.), and a wireless transceiver 132. PED 120 is configured to interact and wirelessly communicate with MCP 102. PED 120 comprises one or more of a computer, microcontroller, microprocessor, and/or other control logic.

In various embodiments, memory 124 is configured to store information used in running PED 120. In various embodiments, memory 124 comprises a computer-readable storage medium, which, in various embodiments, includes a non-transitory storage medium. In various embodiments, the term "non-transitory" indicates that the memory 124 is not embodied in a carrier wave or a propagated signal. In various embodiments, the non-transitory storage medium stores data that, over time, changes (e.g., such as in a random access memory (RAM) or a cache memory). In various embodiments, memory 124 comprises a temporary memory. In various embodiments, memory 124 comprises a volatile memory. In various embodiments, the volatile memory includes one or more of RAM, dynamic RAM (DRAM), static RAM (SRAM), and/or other forms of volatile memories. In various embodiments, memory 124 is configured to store computer program instructions for execution by processor 122. In various embodiments, applications and/or software running on PED 120 utilize(s) memory 124 in order to temporarily store information used during program execution. In various embodiments, memory 124 includes one or more computer-readable storage media. In various embodiments, memory 124 is configured to store larger amounts of information than volatile memory. In various embodiments, memory 124 is configured for longer-term storage of information. In various embodiments, memory 124 includes non-volatile storage elements, such as, for example, electrically programmable memories (EPROM), electrically erasable and programmable (EEPROM) memories, flash memories, floppy discs, magnetic hard discs, optical discs, and/or other forms of memories.

In various embodiments, processor 122 is configured to implement functionality and/or process instructions. In various embodiments, processor 122 is configured to process computer instructions stored in memory 124. In various embodiments, processor 122 includes one or more of a microprocessor, a controller, a digital signal processor (DSP), an application specific integrated circuit (ASIC), a field-programmable gate array (FPGA), or other equivalent discrete or integrated logic circuitry. In various embodiments, display 126 comprises one or more of a screen, touchscreen, or any other suitable interface device(s) that is configured to allow a user to interact and control cargo handling system 100, for example, send command signals to camera 128, PDUs 18, and FCTs 22.

System program instructions and/or processor instructions may be loaded onto memory 124. The system program instructions and/or processor instructions may, in response to execution by operator, cause processor 122 to perform various operations. In particular, and as described in further detail below, the instructions may allow processor 122 to determine an aircraft heading and a heading of PED 120 and orient display 126 in accordance with that determination. The term "non-transitory" is to be understood to remove only propagating transitory signals per se from the claim scope and does not relinquish rights to all standard computer-readable media that are not only propagating transitory signals per se.

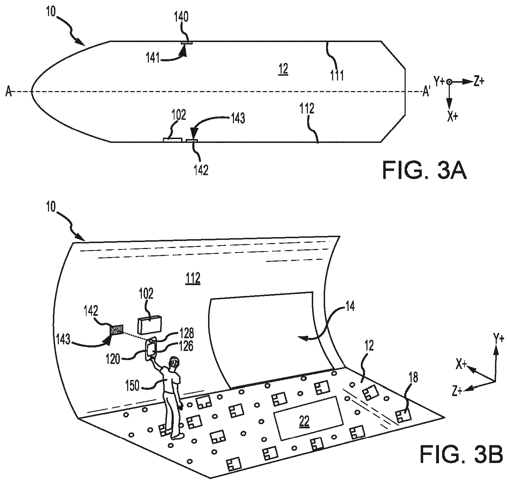

FIG. 3A illustrates a plan view of cargo deck 12, in accordance with various embodiments. FIG. 3B illustrates a perspective view of a portion of cargo deck 12, in accordance with various embodiments. With combined reference to FIGs. 3A and 3B, a right (or first) machine-readable optical label 140 may be attached to a right (or first) wall 111 of aircraft 10. A left (or second) machine-readable optical label 142 may be attached to a left (or second) wall 112 of aircraft 10. As used herein, the terms "left" or "left-facing" and "right" or "right-facing" are determined from the perspective of person looking in the forward direction. In this regard, the aft direction is illustrated as the positive z-direction on the provided x-y-z axis, the forward direction is illustrated as the negative z-direction on the provided x-y-z axis, "left" is illustrated as the positive x-direction on the provided x-y-z axis, and "right" is illustrated as the negative x-direction on the provided x-y-z axis.

Optical labels 140, 142 may comprise a one dimension barcode, two dimension barcode, or other scannable identification tag. Right optical label 140 is attached to right wall 111 such that a scannable surface 141 of right optical label 140 is parallel to aircraft longitudinal axis A-A'. Left optical label 142 is attached to left wall 112 such that a scannable surface 143 of left optical label 142 is parallel to aircraft longitudinal axis A-A'. PED 120 is configured to scan and recognize right and left optical labels 140, 142. For example, prior to a new loading event, operator 150 may scan either right optical label 140 or left optical label 142 using camera 128 of PED 120. While FIG. 3A shows one right optical label 140 and one left optical label 142, it is further contemplate and understood that multiple right optical labels may be located on right wall 111 and/or multiple left optical label may be located on left wall 112 with the scannable surface of each left and right optical label oriented parallel to aircraft longitudinal axis A-A'. The location of the optical labels may be selected such that at least one optical label is accessible when cargo (e.g., cargo 20 in FIG. 1A) is present in cargo deck 12.

With combined reference to FIG. 2 and FIG. 3B, and as discussed in further detail below, processor 122 of PED 120 may be configured to compute a heading of aircraft 10 relative to magnetic north using a viewing angle of camera 128 relative to the scanned optical label. Processor 122 may then determine an orientation for display 126 of PED 120 using the aircraft heading and a heading of PED 120 relative to magnetic north.

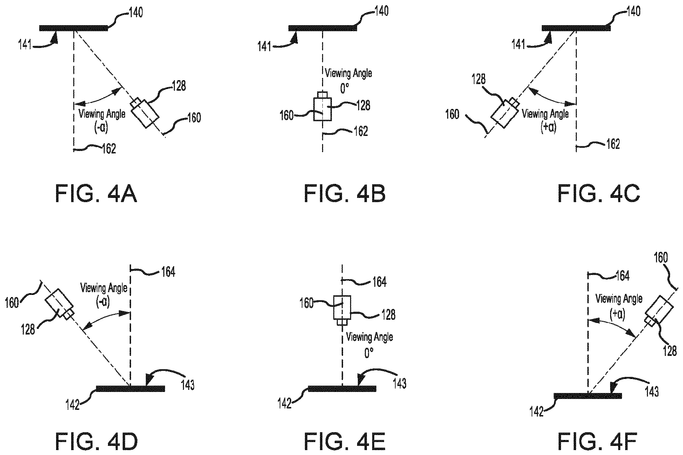

With reference to FIGs. 4A, 4B, and 4C various viewing angles ($\alpha$) of camera 128 are illustrated relative to right optical label 140, in accordance with various embodiments. Viewing angle ($\alpha$) is measured between an imaginary PED camera viewing axis 160 and an imaginary axis 162 that is perpendicular to scannable surface 141 of right optical label 140. Stated differently, viewing angle ($\alpha$) is calculated relative to an axis that is perpendicular to aircraft longitudinal axis A-A', with momentary reference to FIG. 3A. Viewing angle ($\alpha$) of camera 128 may be measured using computer vision techniques, for example, using 2D perspective/warp transformation or similar image/video processing techniques. Viewing angle ($\alpha$) may be measured as a negative angle (-$\alpha$), when camera 128 is positioned aft of axis 162. In this regard, viewing angle ($\alpha$) is between 0° and -90° when camera 128 is positioned aft of axis 162. Viewing angle ($\alpha$) may be measured as a positive angle (+$\alpha$), when camera 128 is positioned forward of axis 162. In this regard, viewing angle ($\alpha$) is between 0° and +90° when camera 128 is positioned forward of axis 162. Viewing angle ($\alpha$) is 0° is when camera 128 is positioned parallel to axis 162. Thus, the viewing angle ranges between +90° and -90° depending on the viewing direction of camera 128.

With reference to FIGs. 4D, 4E, and 4F various viewing angles ($\alpha$) of camera 128 are illustrated relative to left optical label 142, in accordance with various embodiments. Viewing angle ($\alpha$) is measured between an imaginary PED camera viewing axis 160 and an imaginary axis 164 that is perpendicular to scannable surface 143 of left optical label 142. Stated differently, viewing angle ($\alpha$) is calculated relative to an axis that is perpendicular to aircraft longitudinal axis A-A', with momentary reference to FIG. 3A. Viewing angle ($\alpha$) may be measured as a negative angle (-$\alpha$), when camera 128 is positioned forward of axis 164. In this regard, viewing angle ($\alpha$) is between 0° and -90° when camera 128 is positioned forward of axis 162. Viewing angle ($\alpha$) may be measured as a positive angle (+$\alpha$), when camera 128 is positioned aft of axis 164. In this regard, viewing angle ($\alpha$) is between 0° and +90° when camera 128 is positioned aft of axis 164. Viewing angle ($\alpha$) is 0° is when camera 128 is positioned parallel to axis 164. Thus, the viewing angle ranges between +90° and -90° depending on the viewing direction of camera 128.

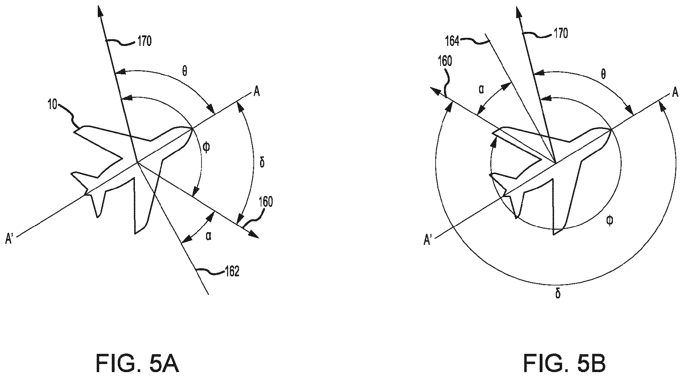

FIG. 5A illustrates various angles that may be calculated based on viewing angle ($\alpha$) relative to axis 162 of right optical label 140. Viewing angle ($\alpha$) is measured relative to viewing axis 160 and axis 162. A PED heading angle ($\phi$) may be measured between viewing axis 160 and magnetic north 170. An aircraft heading angle ($\theta$) may be measured between magnetic north 170 and aircraft longitudinal axis A-A'. A PED heading angle relative to the aircraft heading ($\delta$) (referred to herein as PED orientation angle ($\delta$)) may be measured between viewing axis 160 and aircraft longitudinal axis A-A'.

FIG. 5B various angles that may be calculated based on viewing angle ($\alpha$) relative to axis 164 of left optical label 142. Viewing angle ($\alpha$) is measured relative to viewing axis 160 and axis 164. PED heading angle ($\phi$) may be measured between viewing axis 160 and magnetic north 170. Aircraft heading angle ($\theta$) may be measured between magnetic north 170 and aircraft longitudinal axis A-A'. PED heading relative to aircraft heading angle ($\delta$) may be measured between viewing axis 160 and aircraft longitudinal axis A-A'.

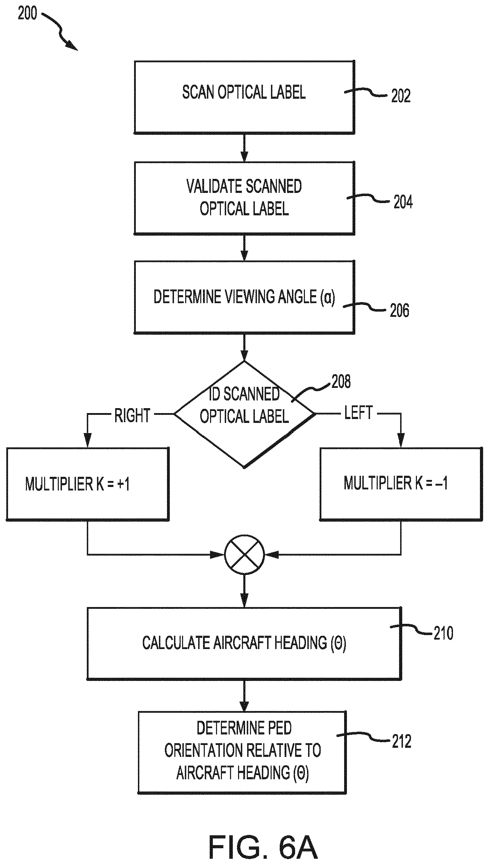

FIG. 6A illustrates the invention in a flow diagram for a method 200 of computing aircraft heading angle ($\theta$) and determining PED display orientation using the viewing angle ($\alpha$) of camera 128 relative to right optical label 140 or left optical label 142, in accordance with various embodiments. Method 200 may include scanning an optical label located on an interior wall of the cargo deck (step 202). In various embodiments, step 202 includes scanning a right optical label 140 or a left optical label 142 using camera 128 of PED 120. Method 200 includes validating the scanned optical label (step 204). Step 204 comprises se processor 122 determining the scanned optical label contains cargo system PED orientation information. For example, processor 122 may determine the optical label is a PED orientation label as opposed to, for example, a ULD identification label.

Method 200 further includes determining a viewing angle ($\alpha$) of the PED camera (step 206). Step 206 comprises processor 122 determining viewing angle ($\alpha$) of camera 128 relative to an axis perpendicular to a scannable surface of the optical label (i.e., to an axis perpendicular to the aircraft longitudinal axis). Method 200 further includes determining if the scanned optical label is a right or left optical label (step 208). In various embodiments, step 208 includes processor 122 determining whether the scanned optical label is a left or right.

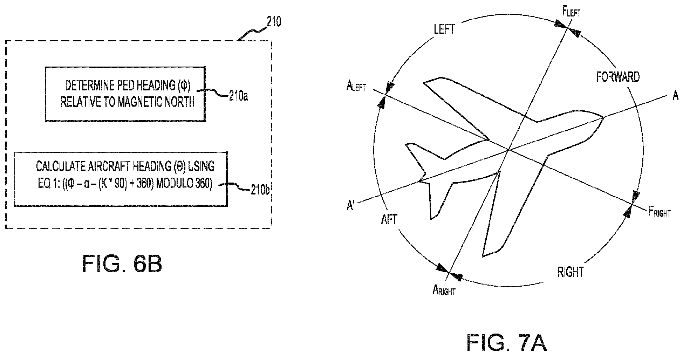

Method 200 further includes calculating an aircraft heading ($\theta$) relative to magnetic north using the viewing angle ($\alpha$) (step 210). In various embodiments, and with reference to FIG. 6B, step 210 includes processor 122 measuring a PED heading ($\phi$) relative to magnetic north (step 210a) and calculating aircraft heading ($\theta$) using equation 1 below (step 210b).

$$\theta = ((\phi - \alpha - (K * 90) + 360)\,\mathrm{MODULO}\,360) \qquad \mathrm{EQ.}\ 1$$

where $\theta$ is the angle of aircraft longitudinal axis A-A' relative to magnetic north; $\phi$ is the angle of the viewing axis of the camera (e.g., viewing axis 160 in FIG. 4A) relative to magnetic north; and $\alpha$ is the angle of viewing axis of the camera (e.g., viewing axis 160 in FIG. 4A) relative to the axis of the optical label (e.g., axis 162 in FIG. 4A). In various embodiments, processor 122 determines PED heading ($\phi$) using sensors 130, for example, magnetometer and/or compasses, of PED 120.

Returning to FIG. 6A, method 200 further includes orienting the PED display using aircraft heading ($\theta$) (step 212). Step 212 includes processor 122 computing an orientation of display 126 of PED 120 based on the orientation of PED 120 relative to aircraft heading ($\theta$).

FIG. 7A illustrates various PED display orientations and orientation boundaries, in accordance with various embodiments. In FIG. 7A, forward right limit ($F_{Right}$), forward left limit ($F_{Left}$), aft right limit ($A_{Right}$), and aft left limit ($A_{Left}$) illustrate orientation limit angles defining the various PED display orientations. A forward-facing display orientation is located between forward left limit ($F_{Left}$) and forward right limit ($F_{Right}$). A right-facing display orientation is between forward right limit ($F_{Right}$) and aft right limit ($A_{Right}$). An aft-facing orientation is between aft right limit ($A_{Right}$) and aft left limit ($A_{Left}$). A left-facing orientation is between aft left limit ($A_{Left}$) and forward left limit ($F_{Left}$). In various embodiments, forward right limit ($F_{Right}$), forward left limit ($F_{Left}$), aft right limit ($A_{Right}$), and aft left limit ($A_{Left}$) may be spaced approximately 90° apart from one another. As used in the previous context, "approximately" means $\pm 2°$. For example, in various embodiments, forward left limit ($F_{Left}$) may be approximately 315° as measured from aircraft longitudinal axis A-A', forward right limit ($F_{Right}$) may be approximately 45° as measured from aircraft longitudinal axis A-A', aft right limit ($A_{Right}$) may be approximately 135° as measured from aircraft longitudinal axis A-A', and aft left limit ($A_{Left}$) may be approximately 225° as measured from aircraft longitudinal axis A-A'. As used in the previous context, "approximately" means $\pm 2°$. The disclosed orientation limit angles are exemplary. In various embodiments, the orientation limit angles may be selected (i.e., are configurable) using an input file stored in memory 124 of the PED 120.

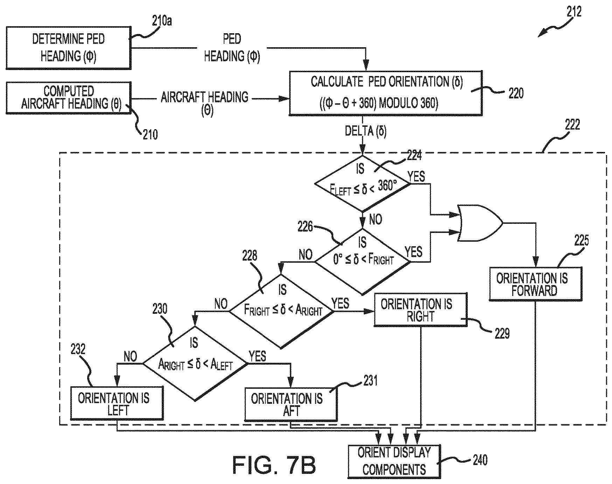

Referring to FIG. 7B, a flow diagram for determining the PED display orientation (step 212) with respect to the aircraft heading is illustrated, in accordance with various embodiments. Step 212 includes calculating a PED orientation ($\delta$) (step 220). PED orientation ($\delta$) is the angle of the PED relative to the aircraft heading ($\theta$). In this regard, as an operator changes the orientation of PED 120 (e.g., pivots camera 128 from an aft-facing direction to a left-facing direction) PED orientation ($\delta$) changes. In various embodiments, PED orientation ($\delta$) may be measured between viewing axis 160 of camera 128 and aircraft longitudinal axis A-A'. In various embodiments, processor 122 may calculate PED orientation ($\delta$) using PED heading ($\phi$) and aircraft heading ($\theta$). Processor 122 may calculate PED orientation ($\delta$) using equation 2.

$$\delta = ((\phi - \theta + 360)\,\mathrm{MODULO}\,360) \qquad \mathrm{EQ.}\ 2$$

where $\delta$ is the angle of viewing axis 160 of camera 128 relative to aircraft longitudinal axis A-A' aircraft; $\theta$ is the angle of aircraft longitudinal axis A-A' relative to magnetic north 170; and $\phi$ is the angle of the viewing axis of the camera (e.g., viewing axis 160 in FIG. 4A) relative to magnetic north 170. Processor 122 may determine PED heading ($\phi$) using sensors 130, for example, a magnetometer and/or compass, of PED 120.

Step 212 further includes comparing PED orientation ($\delta$) to one or more orientation limit angle(s) (also referred to as threshold angles) to determine the orientation of the PED display (step 222). In various embodiments, processor 122 determines if PED orientation ($\delta$) is greater than or equal to forward left limit $F_{Left}$ (e.g., 315°) and less than 360°. If PED orientation ($\delta$) is greater than or equal to forward left limit $F_{Left}$ and less than 360°, processor 122 determines PED 120 is oriented in a forward-facing direction (step 225) and orients cargo system components on display 126 to a forward-facing orientation (step 240). Stated differently, in step 240 processor 122 orients the cargo system components displayed on display 126 of PED 120 to coincide with the orientation of PED 120.

If processor 122 determines PED orientation ($\delta$) is not greater than or equal to forward left limit $F_{Left}$ (e.g., 315°) and not less than 360°, processor 122 may determine if PED orientation ($\delta$) is greater than or equal to 0° and less than forward right limit $F_{Right}$ (e.g., 45°) (step 226). If PED orientation ($\delta$) is greater than or equal to 0° and less than forward right limit $F_{Right}$, processor 122 determines PED 120 is oriented in a forward-facing direction (step 225) and orients various cargo system components on display 126 to a forward-facing orientation (step 240).

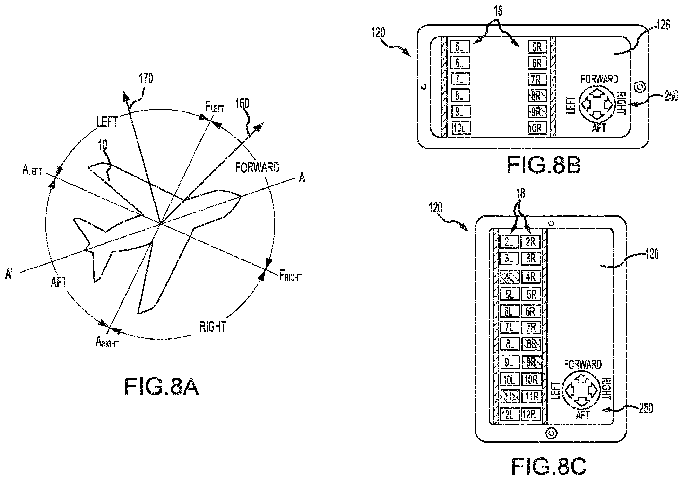

For example, and with reference to FIGs. 8A, 8B, and 8C, when viewing axis 160 is between forward left limit $F_{Left}$ and forward right limit $F_{Right}$, processor 122 will configure display 126 such that a cargo controller icon 250 is oriented with the forward direction oriented toward the top of the PED 120. As used herein, the "top of the PED" refers to the surface or edge of the PED that is oriented away from the ground (e.g., away from cargo deck 12). Processor 122 will configure display 126 such that PDUs 18 are oriented on display 126 in the same direction or orientation as they appear when viewed by the operator holding PED 120 and looking in the direction of viewing axis 160.

Returning to FIG. 7B, if processor 122 determines PED orientation ($\delta$) is not greater than or equal to 0° and not less than forward right limit $F_{Right}$, processor 122 may determine if PED orientation ($\delta$) is greater than or equal to forward right limit $F_{Right}$ and less than aft right limit $A_{Right}$ (e.g., 135°) (step 228). If PED orientation ($\delta$) is greater than or equal to forward right limit $F_{Right}$ and less than aft right limit $A_{Right}$, processor 122 determines PED 120 is oriented in a right-facing direction (step 229) and orients components on display 126 to a right-facing orientation (step 240).

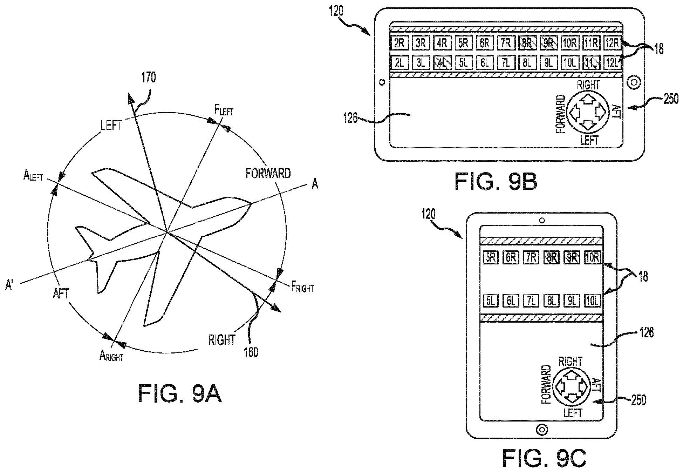

For example, and with reference to FIGs. 9A, 9B, and 9C, when viewing axis 160 is oriented between forward right limit $F_{Right}$ and aft right limit $A_{Right}$, processor 122 will configure display 126 such that cargo controller icon 250 on display 126 is oriented with the right-facing direction oriented toward the top of the PED 120. Processor 122 will further configure display 126 such that PDUs 18 are oriented on display 126 in the same direction or orientation as they appear when viewed by the operator holding PED 120 and looking in the direction of viewing axis 160 (i.e., an operator looking in the right-facing direction).

Returning to FIG. 7B, if processor 122 determines PED orientation ($\delta$) is not greater than or equal to forward right limit $F_{Right}$ and not less than aft right limit $A_{Right}$, processor 122 may determine if PED orientation ($\delta$) is greater than or equal to aft right limit $A_{Right}$ and less than aft left limit $A_{Left}$ (e.g., 225°) (step 230). If PED orientation ($\delta$) is greater than or equal to aft right limit $A_{Right}$ and less than aft left limit $A_{Left}$, processor 122 determines PED 120 is oriented in an aft-facing direction (step 231) and orients components on display 126 to an aft-facing orientation (step 240).

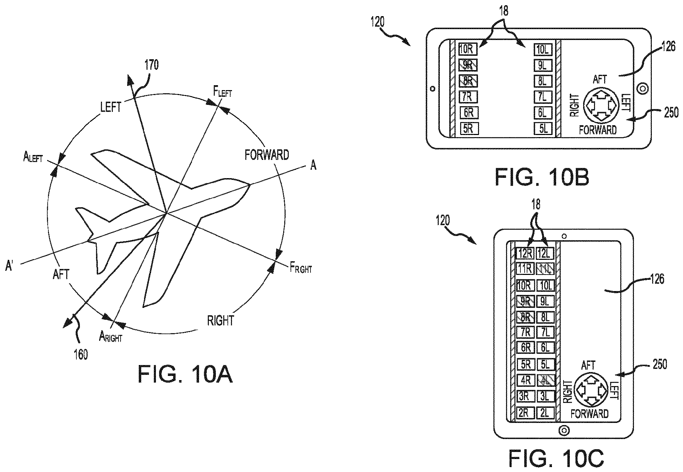

For example, and with reference to FIGs. 10A, 10B, and 10C, when viewing axis 160 is oriented between aft right limit $A_{Right}$ and aft left limit $A_{Left}$, processor 122 will configure display 126 such that cargo controller icon 250 on display 126 is oriented with the aft-facing direction oriented toward the top of the PED 120. Processor 122 will further configure display 126 such that PDUs 18 are oriented on display 126 in the same direction or orientation as they appear when viewed by the operator holding PED 120 and looking in the direction of viewing axis 160 (i.e., an operator looking in the aft-facing direction).

Returning to FIG. 7B, if processor 122 determines PED orientation ($\delta$) is not greater than or equal to aft right limit $A_{Right}$ and not less than aft left limit $A_{Left}$, processor 122 determines that PED 120 is oriented in a left-facing direction (step 232) (i.e., processor 122 determines that PED orientation ($\delta$) is greater than or equal to aft left limit $A_{Left}$ and less than forward right limit $F_{Left}$). Upon determining that PED 120 is oriented in a left-facing direction, processor 122 orients the cargo system components on display 126 to a left-facing orientation (step 240).

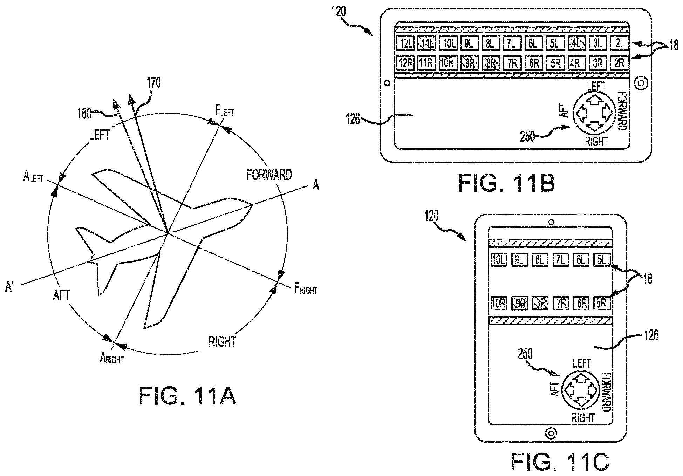

For example, and with reference to FIGs. 11A, 11B, and 11C, when viewing axis 160 is oriented between aft left limit $A_{Left}$ and forward left limit $F_{Left}$, processor 122 will configure display 126 such that cargo controller icon 250 on display 126 is oriented with the left-facing direction oriented toward the top of the PED 120. Processor 122 will further configure display 126 such that the PDUs 18 are oriented on display 126 in the same direction or orientation as they appear when viewed by the operator holding PED 120 and looking in the direction of viewing axis 160 (i.e., an operator looking in the left-facing direction).

Cargo handling system 100 with PED 120, allows the orientation of PED display 126 to be determined relative to aircraft heading, without relying on other aircraft systems. In various embodiments, using camera 128 and optical labels 140, 142 may allow the aircraft heading and display orientation to be determined in the absence of aircraft power. Auto orientation of display 126 tends to reduce operator constraints, as operators tend to be less confused due to the operator not adjusting his/her viewing direction according to a fixed display. Instead the processor 122 adjusts display 126 based on the operator's viewing direction, which may also enable the operator to focus on the actual cargo loading and unloading operation rather than focusing on the display orientation. The orientation limit angles may be configured to cater the needs of different aircrafts, for example different sized and/or different shaped cargo decks.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B, and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A portable electronic device for controlling a cargo handling system, the portable electronic device (120), comprising:

a display;
a camera (128);
a processor (122) in electronic communication with the camera and the display; and
a tangible, non-transitory memory (124) configured to communicate with the processor, the tangible, non-transitory memory (124) having instructions stored thereon that, in response to execution by the processor, cause the processor (122) to perform operations comprising:

identifying (202), by the processor (122), an optical label scanned by the camera;
and **characterized by** determining (206), by the processor (122), a direction in which the portable electronic device is facing based on the viewing angle of the camera relative to the optical label; and
orienting (240), by the processor, a location of a cargo system component on the display to coincide with the direction in which the portable electronic device is facing.

2. The portable electronic device of claim 1, wherein the operations further comprise determining, by the processor (122), an aircraft heading.

3. The portable electronic device of claim 2, wherein determining the aircraft heading comprises:

determining, by the processor, a heading of the portable electronic device relative to magnetic north; and
calculating, by the processor, the aircraft heading using the heading of the portable electronic device and the viewing angle of the camera (128) relative to the optical label.

4. The portable electronic device of claim 3, wherein determining the orientation of the display (126) comprises:

calculating, by the processor, a portable electronic device orientation relative to the aircraft heading; and
comparing, by the processor, the portable electronic device orientation to an orientation limit angle.

5. The portable electronic device of claim 4, wherein determining the orientation of the display (126) further comprises orienting, by the processor, a location of a cargo system component on the display to coincide with an orientation of the portable electronic device, and/or wherein the viewing angle of the camera relative to the optical label (142) is measured between a viewing axis of the camera and an axis perpendicular to a scannable surface of the optical label (142).

6. The portable electronic device of any preceding claim, wherein identifying the optical label (142) scanned by the camera comprises determining, by the processor, if the optical label (142) is a right optical label or a left optical label.

7. A method for orienting a display of a portable electronic device configured to control a cargo handling system, comprising:

identifying (202), by a processor (122), an optical label (142) scanned by a camera;
and **characterized by** determining (206), by the processor (122), a direction in which the portable electronic device is facing based on the viewing angle of the camera (128) relative to the optical label; and
orienting (240), by the processor, a location of a cargo system component on the display to coincide with the direction in which the portable electronic device is facing.

8. The method of claim 7, further comprising determining, by the processor (122), an aircraft heading.

9. The method of claim 8, wherein determining the aircraft heading comprises:

determining, by the processor (122), a heading of the portable electronic device relative to magnetic north; and calculating, by the processor (122), the aircraft heading using the heading of the portable electronic device and the viewing angle of the camera relative to the optical label (142).

10. The method of claim 9, wherein determining the orientation of the display comprises:

calculating, by the processor (122), a portable electronic device orientation relative to the aircraft heading; and comparing, by the processor (122), the portable electronic device orientation to an orientation limit angle, and wherein determining the orientation of the display further comprises orienting, by the processor, a location of a cargo system component on the display to coincide with an orientation of the portable electronic device.

11. The method of any of claims 7 to 10, wherein identifying the optical label scanned by the camera comprises determining, by the processor (122), if the optical label (142) is a right optical label or a left optical label, and wherein the viewing angle of the camera (128) relative to the optical label is measured between a viewing axis of the camera (128) and an axis perpendicular to a scannable surface of the optical label (142).

12. An article of manufacture including a tangible, non-transitory computer-readable storage medium having instructions stored thereon for orienting a display of a portable electronic device configured to control a cargo handling system, wherein the instructions, in response to execution by a processor, cause the processor (122) to perform operations comprising:

identifying (202), by the processor (122), an optical label scanned by a camera of the portable electronic device; determining (206), by the processor, a direction in which the portable electronic device is facing based on a viewing angle of the camera relative to the optical label; and orienting (240), by the processor (122), a location of a cargo system component on the display to coincide with the direction in which the portable electronic device is facing.

13. The article of claim 12, wherein the operations further comprise determining, by the processor, an aircraft heading, and wherein determining the aircraft heading comprises:

determining, by the processor (122), a heading of the portable electronic device relative to magnetic north; and calculating, by the processor (122), the aircraft heading using the heading of the portable electronic device and the viewing angle of the camera relative to the optical label.

14. The article of claim 13, wherein determining the orientation of the display comprises:

calculating, by the processor (122), a portable electronic device orientation relative to the aircraft heading; and comparing, by the processor (122), the portable electronic device orientation to an orientation limit angle, and wherein determining the orientation of the display further comprises orienting, by the processor (122), a location of a cargo system component on the display to coincide with an orientation of the portable electronic device.

15. The article of claim 14, wherein identifying the optical label (142) scanned by the camera (128) comprises determining, by the processor (122), if the optical label (142) is a right optical label or a left optical label.

**Patentansprüche**

1. Tragbare elektronische Vorrichtung zum Steuern eines Frachthandhabungssystems, wobei die tragbare elektronische Vorrichtung (120) Folgendes umfasst:

eine Anzeige; eine Kamera (128); einen Prozessor (122) in elektronischer Kommunikation mit der Kamera und der Anzeige; und einen physischen, nichtflüchtigen Speicher (124), der zum Kommunizieren mit dem Prozessor konfiguriert ist, wobei der physische, nichtflüchtige Speicher (124) darauf gespeicherte Anweisungen aufweist, die als Reaktion auf eine Ausführung durch den Prozessor den Prozessor (122) zum Durchführen von Vorgängen veranlassen, die Folgendes umfassen:

Identifizieren (202) eines von der Kamera gescannten optischen Etiketts durch den Prozessor (122); und **gekennzeichnet durch** Bestimmen (206) einer Richtung, in die die tragbare elektronische Vorrichtung zeigt, durch den Prozessor (122) basierend auf dem Blickwinkel der Kamera relativ zu dem optischen Etikett; und

Ausrichten (240) einer Position einer Frachtsystemkomponente auf der Anzeige durch den Prozessor, sodass sie mit der Richtung übereinstimmt, in die die tragbare elektronische Vorrichtung zeigt.

2. Tragbare elektronische Vorrichtung nach Anspruch 1, wobei die Vorgänge ferner Bestimmen einer Flugzeugpositionierung durch den Prozessor (122) umfassen.

3. Tragbare elektronische Vorrichtung nach Anspruch 2, wobei Bestimmen der Flugzeugpositionierung Folgendes umfasst:

Bestimmen einer Positionierung der tragbaren elektronischen Vorrichtung relativ zu dem magnetischen Nordpol durch den Prozessor; und

Berechnen der Flugzeugpositionierung durch den Prozessor unter Verwendung der Positionierung der tragbaren elektronischen Vorrichtung und des Blickwinkels der Kamera (128) relativ zu dem optischen Etikett.

4. Tragbare elektronische Vorrichtung nach Anspruch 3, wobei Bestimmen der Ausrichtung der Anzeige (126) Folgendes umfasst:

Berechnen einer Ausrichtung einer tragbaren elektronischen Vorrichtung relativ zur Flugzeugpositionierung durch den Prozessor; und

Vergleichen der Ausrichtung der tragbaren elektronischen Vorrichtung mit einem Ausrichtungsgrenzwinkel durch den Prozessor.

5. Tragbare elektronische Vorrichtung nach Anspruch 4, wobei Bestimmen der Ausrichtung der Anzeige (126) ferner Ausrichten einer Position einer Frachtsystemkomponente auf der Anzeige durch den Prozessor umfasst, sodass sie mit einer Ausrichtung der tragbaren elektronischen Vorrichtung übereinstimmt, und /oder wobei der Blickwinkel der Kamera relativ zu dem optischen Etikett (142) zwischen einer Blickachse der Kamera und einer Achse senkrecht zu einer scannbaren Fläche des optischen Etiketts (142) gemessen wird.

6. Tragbare elektronische Vorrichtung nach einem der vorhergehenden Ansprüche, wobei Identifizieren des von der Kamera gescannten optischen Etiketts (142) Bestimmen durch den Prozessor umfasst, ob das optische Etikett (142) ein rechtes optisches Etikett oder ein linkes optisches Etikett ist.

7. Verfahren zum Ausrichten einer Anzeige einer tragbaren elektronischen Vorrichtung, die zum Steuern eines Frachthandhabungssystems konfiguriert ist, umfassend:

Identifizieren (202) eines von einer Kamera gescannten optischen Etiketts (142) durch einen Prozessor (122); und **gekennzeichnet durch** Bestimmen (206) einer Richtung, in die die tragbare elektronische Vorrichtung zeigt, durch den Prozessor (122) basierend auf dem Blickwinkel der Kamera (128) relativ zu dem optischen Etikett; und

Ausrichten (240) einer Position einer Frachtsystemkomponente auf der Anzeige durch den Prozessor, sodass sie mit der Richtung übereinstimmt, in die die tragbare elektronische Vorrichtung zeigt.

8. Verfahren nach Anspruch 7, ferner umfassend Bestimmen einer Flugzeugpositionierung durch den Prozessor (122).

9. Verfahren nach Anspruch 8, wobei Bestimmen der Flugzeugpositionierung Folgendes umfasst:

Bestimmen einer Positionierung der tragbaren elektronischen Vorrichtung relativ zu dem magnetischen Nordpol durch den Prozessor (122); und

Berechnen der Flugzeugpositionierung durch den Prozessor (122) unter Verwendung der Positionierung der tragbaren elektronischen Vorrichtung und des Blickwinkels der Kamera relativ zu dem optischen Etikett (142).

**10.** Verfahren nach Anspruch 9, wobei Bestimmen der Ausrichtung der Anzeige Folgendes umfasst:

Berechnen einer Ausrichtung einer tragbaren elektronischen Vorrichtung relativ zu der Flugzeugpositionierung durch den Prozessor (122); und

Vergleichen der Ausrichtung der tragbaren elektronischen Vorrichtung mit einem Ausrichtungsgrenzwinkel durch den Prozessor (122) und

wobei Bestimmen der Ausrichtung der Anzeige ferner Ausrichten einer Position einer Frachtsystemkomponente auf der Anzeige durch den Prozessor umfasst, sodass sie mit einer Ausrichtung der tragbaren elektronischen Vorrichtung übereinstimmt.

**11.** Verfahren nach einem der Ansprüche 7 bis 10, wobei Identifizieren des von der Kamera gescannten optischen Etiketts Bestimmen durch den Prozessor (122) umfasst, ob das optische Etikett (142) ein rechtes optisches Etikett oder ein linkes optisches Etikett ist, und

wobei der Blickwinkel der Kamera (128) relativ zu dem optischen Etikett zwischen einer Blickachse der Kamera (128) und einer Achse senkrecht zu einer scannbaren Fläche des optischen Etiketts (142) gemessen wird.

**12.** Herstellungsgegenstand, der ein physisches, nichtflüchtiges computerlesbares Speichermedium beinhaltet, das darauf gespeicherte Anweisungen zum Ausrichten einer Anzeige einer tragbaren elektronischen Vorrichtung aufweist, die zum Steuern eines Frachthandhabungssystems konfiguriert ist, wobei die Anweisungen als Reaktion auf eine Ausführung durch einen Prozessor den Prozessor (122) zum Durchführen von Vorgängen veranlassen, die Folgendes umfassen:

Identifizieren (202) eines von einer Kamera der tragbaren elektronischen Vorrichtung gescannten optischen Etiketts durch den Prozessor (122);

Bestimmen (206) einer Richtung, in die die tragbare elektronische Vorrichtung zeigt, durch den Prozessor basierend auf einem Blickwinkel der Kamera relativ zu dem optischen Etikett; und

Ausrichten (240) einer Position einer Frachtsystemkomponente auf der Anzeige durch den Prozessor (122), sodass sie mit der Richtung übereinstimmt, in die die tragbare elektronische Vorrichtung zeigt.

**13.** Artikel nach Anspruch 12, wobei die Vorgänge ferner Bestimmen einer Flugzeugpositionierung durch den Prozessor umfassen und

wobei Bestimmen einer Flugzeugpositionierung Folgendes umfasst:

Bestimmen einer Positionierung der tragbaren elektronischen Vorrichtung relativ zu dem magnetischen Nordpol durch den Prozessor (122); und

Berechnen der Flugzeugpositionierung durch den Prozessor (122) unter Verwendung der Positionierung der tragbaren elektronischen Vorrichtung und des Blickwinkels der Kamera relativ zu dem optischen Etikett.

**14.** Artikel nach Anspruch 13, wobei Bestimmen der Ausrichtung der Anzeige Folgendes umfasst:

Berechnen einer Ausrichtung einer tragbaren elektronischen Vorrichtung relativ zu der Flugzeugpositionierung durch den Prozessor (122); und

Vergleichen der Ausrichtung der tragbaren elektronischen Vorrichtung mit einem Ausrichtungsgrenzwinkel durch den Prozessor (122) und

wobei Bestimmen der Ausrichtung der Anzeige ferner Ausrichten einer Position einer Frachtsystemkomponente auf der Anzeige durch den Prozessor (122) umfasst, sodass sie mit einer Ausrichtung der tragbaren elektronischen Vorrichtung übereinstimmt.

**15.** Artikel nach Anspruch 14, wobei Identifizieren des von der Kamera (128) gescannten optischen Etiketts (142) Bestimmen durch den Prozessor (122) umfasst, ob das optische Etikett (142) ein rechtes optisches Etikett oder ein linkes optisches Etikett ist.

**Revendications**

**1.** Dispositif électronique portable pour commander un système de manutention de cargaison, le dispositif électronique portable (120) comprenant :

un affichage ;

une caméra (128) ;

un processeur (122) en communication électronique avec la caméra et l'affichage ; et

une mémoire tangible non transitoire (124) configurée pour communiquer avec le processeur, sur laquelle mémoire tangible non transitoire (124) sont stockées des instructions qui, en réponse à l'exécution par le processeur, amènent le processeur (122) à effectuer des opérations comprenant :

l'identification (202), par le processeur (122), d'une étiquette optique balayée par la caméra ;

et **caractérisé par** la détermination (206), par le processeur (122), d'une direction dans laquelle le dispositif électronique portable est orienté sur la base de l'angle de vision de la caméra par rapport à l'étiquette optique ; et

l'orientation (240), par le processeur, d'un emplacement d'un composant de système de cargaison sur l'affichage pour coïncider avec la direction dans laquelle le dispositif électronique portable est orienté.

2. Dispositif électronique portable selon la revendication 1, dans lequel les opérations comprennent en outre la détermination, par le processeur (122), d'un cap d'aéronef.

3. Dispositif électronique portable selon la revendication 2, dans lequel la détermination du cap de l'aéronef comprend :

la détermination, par le processeur, d'un cap du dispositif électronique portable par rapport au nord magnétique ; et

le calcul, par le processeur, du cap de l'aéronef à l'aide du cap du dispositif électronique portable et de l'angle de vision de la caméra (128) par rapport à l'étiquette optique.

4. Dispositif électronique portable selon la revendication 3, dans lequel la détermination de l'orientation de l'affichage (126) comprend :

le calcul, par le processeur, d'une orientation du dispositif électronique portable par rapport au cap de l'aéronef ; et

la comparaison, par le processeur, de l'orientation du dispositif électronique portable avec un angle limite d'orientation.

5. Dispositif électronique portable selon la revendication 4, dans lequel la détermination de l'orientation de l'affichage (126) comprend en outre l'orientation, par le processeur, d'un emplacement d'un composant de système de cargaison sur l'affichage pour coïncider avec une orientation du dispositif électronique portable, et/ou dans lequel l'angle de vision de la caméra par rapport à l'étiquette optique (142) est mesuré entre un axe de visualisation de la caméra et un axe perpendiculaire à une surface balayable de l'étiquette optique (142).

6. Dispositif électronique portable selon une quelconque revendication précédente, dans lequel l'identification de l'étiquette optique (142) balayée par la caméra comprend la détermination, par le processeur, du fait que l'étiquette optique (142) est une étiquette optique droite ou une étiquette optique gauche.

7. Procédé pour orienter un affichage d'un dispositif électronique portable configuré pour commander un système de manutention de cargaison, comprenant :

l'identification (202), par un processeur (122), d'une étiquette optique (142) balayée par une caméra ;

et **caractérisé par** la détermination (206), par le processeur (122), d'une direction dans laquelle le dispositif électronique portable est orienté sur la base de l'angle de vision de la caméra (128) par rapport à l'étiquette optique ; et

l'orientation (240), par le processeur, d'un emplacement d'un composant de système de cargaison sur l'affichage pour coïncider avec la direction dans laquelle le dispositif électronique portable est orienté.

8. Procédé selon la revendication 7, comprenant en outre la détermination, par le processeur (122), du cap d'un aéronef.

9. Procédé selon la revendication 8, dans lequel la détermination du cap de l'aéronef comprend :

la détermination, par le processeur (122), d'un cap du dispositif électronique portable par rapport au nord magnétique ; et

le calcul, par le processeur (122), du cap de l'aéronef à l'aide du cap du dispositif électronique portable et de l'angle de vision de la caméra par rapport à l'étiquette optique (142).

10. Procédé selon la revendication 9, dans lequel la détermination de l'orientation de l'affichage comprend :

le calcul, par le processeur (122), d'une orientation du dispositif électronique portable par rapport au cap de l'aéronef ; et
la comparaison, par le processeur (122), de l'orientation du dispositif électronique portable avec un angle limite d'orientation, et
dans lequel la détermination de l'orientation de l'affichage comprend en outre l'orientation, par le processeur, d'un emplacement d'un composant du système de cargaison sur l'affichage pour coïncider avec une orientation du dispositif électronique portable.

11. Procédé selon l'une quelconque des revendications 7 à 10, dans lequel l'identification de l'étiquette optique balayée par la caméra comprend la détermination, par le processeur (122), de la question de savoir si l'étiquette optique (142) est une étiquette optique droite ou une étiquette optique gauche, et
dans lequel l'angle de vision de la caméra (128) par rapport à l'étiquette optique est mesuré entre un axe de visualisation de la caméra (128) et un axe perpendiculaire à une surface balayable de l'étiquette optique (142).

12. Article manufacturé comportant un support de stockage tangible non transitoire lisible par ordinateur sur lequel sont stockées des instructions pour orienter un affichage d'un dispositif électronique portable configuré pour commander un système de manutention de cargaison, dans lequel les instructions, en réponse à l'exécution par un processeur, amènent le processeur (122) à effectuer des opérations comprenant :

l'identification (202), par le processeur (122), d'une étiquette optique balayée par une caméra du dispositif électronique portable ;
la détermination (206), par le processeur, d'une direction dans laquelle le dispositif électronique portable est orienté sur la base d'un angle de vision de la caméra par rapport à l'étiquette optique ; et
l'orientation (240), par le processeur (122), d'un emplacement d'un composant de système de cargaison sur l'affichage pour coïncider avec la direction dans laquelle le dispositif électronique portable est orienté.

13. Article selon la revendication 12, dans lequel les opérations comprennent en outre la détermination, par le processeur, d'un cap d'aéronef, et
dans lequel la détermination du cap de l'aéronef comprend :

la détermination, par le processeur (122), d'un cap du dispositif électronique portable par rapport au nord magnétique ; et
le calcul, par le processeur (122), du cap de l'aéronef à l'aide du cap du dispositif électronique portable et de l'angle de vision de la caméra par rapport à l'étiquette optique.

14. Article selon la revendication 13, dans lequel la détermination de l'orientation de l'affichage comprend :

le calcul, par le processeur (122), d'une orientation du dispositif électronique portable par rapport au cap de l'aéronef ; et
la comparaison, par le processeur (122), de l'orientation du dispositif électronique portable avec un angle limite d'orientation, et
dans lequel la détermination de l'orientation de l'affichage comprend en outre l'orientation, par le processeur (122), d'un emplacement d'un composant de système de cargaison sur l'affichage pour coïncider avec une orientation du dispositif électronique portable.

15. Article selon la revendication 14, dans lequel l'identification de l'étiquette optique (142) balayée par la caméra (128) comprend la détermination, par le processeur (122), du fait que l'étiquette optique (142) est une étiquette optique droite ou une étiquette optique gauche.

FIG.1A

FIG.1B

FIG. 2

FIG. 3A

FIG. 3B

FIG. 4A

FIG. 4B

FIG. 4C

FIG. 4D

FIG. 4E

FIG. 4F

FIG. 5A

FIG. 5B

200

SCAN OPTICAL LABEL — 202

VALIDATE SCANNED OPTICAL LABEL — 204

DETERMINE VIEWING ANGLE ($\alpha$) — 206

ID SCANNED OPTICAL LABEL — 208

RIGHT

LEFT

MULTIPLIER K = +1

MULTIPLIER K = −1

$\otimes$

CALCULATE AIRCRAFT HEADING ($\theta$) — 210

DETERMINE PED ORIENTATION RELATIVE TO AIRCRAFT HEADING ($\theta$) — 212

FIG. 6A

DETERMINE PED HEADING (φ) RELATIVE TO MAGNETIC NORTH — 210a

CALCULATE AIRCRAFT HEADING (θ) USING EQ 1: ((φ – α – (K * 90) + 360) MODULO 360) — 210b

FIG. 6B

FIG. 7A

FIG. 7B

FIG.8A

FIG.8B

FIG.8C

FIG. 9A

FIG. 9B

FIG. 9C

FIG. 10A

FIG. 10B

FIG. 10C

FIG. 11A

FIG. 11B

FIG. 11C

**EP 3 716 023 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180089611 A1